# FASCICULE DE BREVET EUROPEEN

(11) **EP 1 352 811 B1**
(45) Date de publication et mention de la délivrance du brevet: **26.07.2006**
(21) Numéro de dépôt: 03290877.4
(22) Date de dépôt: 09.04.2003
(51) Int. Cl.: B62D 25/08, B62D 65/00, B62D 29/00, B60R 19/24

(54) **Support d'éléments de carrosserie de véhicule automobile, face avant technique divisée en deux parties et bloc avant de véhicule automobile divisé en deux modules**
Unterstützungselemente für Aussenhautteile, zweiteiliges Vorderteil eines Kraftfahzeuges, Vorderteil mit zwei Modulen
Support for vehicle body panels, two part front body part and front of vehicle divided in two modules

(30) Priorité: 09.04.2002 FR 0204426
(43) Date de publication de la demande: 15.10.2003
(60) Demande divisionnaire: 05076871.2
(73) Titulaire: COMPAGNIE PLASTIC OMNIUM, 69007 Lyon (FR)
(72) Inventeur: Andre, Gérald, 01500 Amberieu en Bugey (FR); Cheron, Hugues, 01800 Meximieux (FR); Fayt, Arnold, 01640 Jujurieux (FR)
(74) Mandataire: de la Bigne, Guillaume Michel Marie

(56) Documents cités:
- EP-A- 1 036 730
- DE-A- 19 911 832
- FR-A- 2 816 577
- FR-A- 2 827 251
- US-B1- 6 357 821

## Description

La présente invention concerne un support d'éléments de carrosserie de véhicule automobile, une face avant technique et un bloc avant de véhicule automobile.

On connaît les faces avant techniques qui sont des pièces rigides structurelles servant à réunir différents organes fonctionnels d'un véhicule, comme, par exemple, un radiateur, des réservoirs, des blocs optiques, pour constituer un ensemble préparé à l'avance qui est rapporté d'un seul bloc sur la chaîne de montage du véhicule.

On réduit ainsi la longueur de la chaîne montage du véhicule en évitant de monter un à un les organes fonctionnels à l'avant du véhicule.

En revanche, le montage des éléments de carrosserie demeure traditionnel car, après la face avant technique, il faut rapporter séparément le bouclier, la calandre et, éventuellement, d'autres éléments de carrosserie sur le bloc avant du véhicule.

On connaît de WO-A-03/006302 un exemple de face avant technique sur laquelle on rapporte des blocs optiques, un bouclier, des ailes, de façon séparée.

Ce montage traditionnel des éléments de carrosserie soulève des difficultés bien connues de mise en référence entre éléments de carrosserie voisins, ainsi qu'entre blocs optiques et éléments de carrosserie, compte tenu notamment des dilatations qu'ils subissent au cours de l'utilisation du véhicule.

La présente invention vise à proposer une solution technique permettant d'améliorer les conditions de montage des éléments de carrosserie sur le véhicule, tout en conservant les avantages liés au montage préalable des organes fonctionnels sur une face avant technique.

La présente invention a également pour but de permettre l'utilisation d'éléments de carrosserie dont les parois sont remarquablement fines, ce qui les rend légers et économiques.

La présente invention a tout d'abord pour objet un support pour un bouclier et au moins deux éléments optiques destiné à être fixé devant une partie structurelle sur laquelle une poutre de pare-chocs est fixée, comprenant :
- des moyens de réception et de fixation d'éléments d'optiques,
- des organes de fixation d'un bouclier,
- des zones d'accostage pour recevoir les bords du bouclier et les mettre en référence avec les bords d'éléments de carrosserie et d'éléments d'optiques adjacents, et
- un absorbeur à hauteur de la poutre pour traiter les chocs "jambe".

Conformément à l'invention, les éléments d'optiques peuvent être des vitrages d'optiques, des blocs optiques complets ou des survitrages, c'est-à-dire des vitres placées devant des blocs optiques comportant déjà des vitrages.

Le rôle du support selon l'invention est de réunir et de pré-positionner les différents éléments de carrosserie situés à l'avant du véhicule, à savoir généralement, le pare-chocs, les éléments d'optiques et la calandre, et d'assurer leur maintien pendant leur montage sur le véhicule, puis au cours de l'utilisation dudit véhicule.

Grâce à l'invention on peut en particulier monter simultanément les éléments d'optiques et les éléments de carrosserie sur le véhicule pour constituer le bloc avant, ce qui procure à la fois une réduction du temps de montage du véhicule et une amélioration de la mise en référence des différents éléments de carrosserie et d'optique les uns par rapport aux autres.

Un des avantages de l'invention est que les éléments de carrosserie portés par le support peuvent présenter une épaisseur très fine, ce qui réduit le poids de l'ensemble de pièces rassemblées sur ledit support.

En effet, grâce au support de l'invention, on peut manipuler des éléments de carrosserie assez peu rigides et les monter sans difficulté sur le véhicule.

Dans un mode de réalisation particulier, le support comporte des organes de soutien d'éléments de carrosserie qui compensent le manque de rigidité des éléments de carrosserie et évitent des déformations indésirables d'un point de vue esthétique, bien que sans conséquence sur le plan structurel.

Un autre avantage lié au fait que l'on peut fixer les éléments de carrosserie de faible épaisseur sur le support est que lesdits éléments de carrosserie, maintenus par leurs bords, sont forcés de se dilater dans leur volume, sans expansion périphérique, ce qui garantit une bonne conservation de leur mise en référence les uns par rapport aux autres.

Ainsi, on comprend que la fonction des organes de soutien vis-à-vis des éléments de carrosserie est uniquement esthétique et non structurelle, la structure du véhicule n'étant ni renforcée ni dégradée par la présence ou l'absence de tels organes de soutien.

Dans un mode de réalisation particulier de l'invention, les zones d'accostage assurant notamment l'accostage des éléments de carrosserie portés par le support avec des éléments de carrosserie environnants, sont constituées par des presseurs aile/bouclier de structure bien connue et les zones d'accostage agissant entre éléments de carrosserie et d'optiques portés par le support sont constitués par une fixation calandre/bouclier et un soutien de la plage supérieure du bouclier.

Dans un mode de réalisation particulier de l'invention, le support pour éléments de carrosserie comprend en outre des moyens de positionnement et de fixation d'une serrure de capot.

La présente invention a également pour objet une face avant technique, caractérisée par le fait qu'elle est divisée en deux parties, à savoir une partie structurelle recevant des organes fonctionnels du véhicule et une partie géométrique constituée par un support tel que décrit ci-dessus.

La partie structurelle et la partie géométrique sont conformées pour s'assembler aisément, de préférence selon la direction longitudinale du véhicule.

N'ayant pas de liaison directe avec des éléments de carrosserie du véhicule, la partie structurelle de la face avant technique n'a pas à être positionnée de manière très précise par rapport aux éléments de carrosserie, ce qui facilite son montage sur le véhicule.

En d'autres termes, la face avant technique selon l'invention opère une distinction entre les parties fonctionnelles, dont le positionnement tolère quelques imprécisions, et les éléments de carrosserie et d'optiques, qui doivent être très précisément positionnés les uns par rapport aux autres, tant ceux portés par la partie géométrique que pour ceux portés par le reste du véhicule, autour du bloc avant.

Grâce à cette distinction, l'invention conserve le principe de la face avant technique comme ensemble de pièces pouvant être préparé par avance en-dehors de la chaîne de montaye du véhicule, et ce principe s'applique aussi bien aux organes fonctionnels qu'aux éléments de carrosserie du véhicule.

En outre, l'ordre et la manière suivant lesquels on prépare l'une ou l'autre partie de la face avant technique n'a pas d'incidence sur le montage du véhicule. En particulier, la partie structurelle de la face avant technique peut ne pas être préparée à l'avance, mais être assemblée directement sur le véhicule, avant mise en place de la partie géométrique.

L'invention a également pour objet un procédé de montage de pièces sur une face avant technique d'un véhicule automobile telle que décrite ci-dessus, la direction X indiquant la direction horizontale longitudinale du véhicule, la direction Y indiquant la direction horizontale transversale du véhicule et la direction Z indiquant la direction verticale, procédé dans lequel:
- On fixe la partie structurelle au châssis du véhicule sans positionnement précis selon les directions X et Y mais en respectant une référence géométrique de la carrosserie selon la direction Z, telle que l'extrémité des renforts de côtés d'auvent ou l'aile, si celle-ci est déjà présente sur la caisse du véhicule au moment du montage de la partie structurelle.
- On place ensuite la partie géométrique en l'appuyant verticalement sur la partie structurelle qui lui impose son positionnement suivant la direction Z. La partie géométrique se positionne suivant les directions X et Y par rapport à une référence géométrique de la carrosserie comme, par exemple, les mêmes extrémités de l'aile.

Dans le mode de réalisation où le support pour éléments de carrosserie comprend des moyens de positionnement et de fixation d'une serrure de capot, la serrure du capot est préalablement fixée sur la partie géométrique de la face avant technique en étant placée exactement à distance souhaitée des vitrages d'optique sur le support.

Lors du positionnement de la partie géométrique sur la partie structurelle de la face avant technique, la serrure se voit imposer son positionnement en Z par la partie structurelle, tandis qu'elle conserve ses positionnements en X et Y sur le support, qui est lui-même positionné en X et Y par les références géométriques de carrosserie fournies par le véhicule. La serrure se retrouve ainsi convenablement positionnée suivant les trois directions X, Y et Z.

Le bon centrage du capot par rapport aux éléments de carrosserie est ainsi garanti, du fait que ce centrage découle directement de la position de la serrure.

Dans un mode de réalisation particulier de l'invention, la partie structurelle de la face avant technique est agencée pour être fixée sur la caisse du véhicule, à l'extrémité de ses deux longerons.

Dans un mode de réalisation particulier, la fixation de la partie géométrique sur la caisse s'effectue par les extrémités de renfort de côtés d'auvents et par une re-fixation de la serrure sur la partie structurelle selon la direction Z.

Dans une variante particulière, la partie géométrique et la partie structurelle comportent, au voisinage de la serrure, des sections profilées qui, en s'assemblant, forment un corps creux qui rigidifie la face avant technique dans la région de fixation de la serrure.

Suivant d'autres caractéristiques avantageuses de l'invention :
- La partie géométrique de la face avant technique comporte une traverse d'aspect qui masque, sous le capot, une traverse structurelle.
- La partie géométrique comporte des éléments destinés à traiter les chocs avec des piétons, à savoir une armature supérieure destinée à servir d'appui au bouclier pour traiter les chocs "hanche" des piétons (ou les chocs "tête enfant") et l'appui fessier et/ou un absorbeur de type nid d'abeille à hauteur de la poutre de chocs pour traiter les chocs "jambe" et/ou une poutre en partie basse.
- La partie structurelle peut indifféremment être montée sur le véhicule en même temps que le groupe motopropulseur auquel elle a été préalablement fixée ou, après le groupe motopropulseur,
- Lors du montage de la partie géométrique sur le véhicule, non seulement les éléments de carrosserie portés par le support demeurent convenablement positionnés les uns par rapport aux autres et par rapport aux vitrages d'optique, mais, en outre, les ailes du véhicule viennent se raccorder par les zones d'accostage du support aux bords des éléments de carrosserie portés par le support pour se positionner de manière précise par rapport à ceux-ci, l'extrémité de chaque aile étant maintenue et re-conformée par le support pour se trouver exactement à affleurement des vitrages d'optique et/ou des éléments de carrosserie portés par le support.
- La partie structurelle supporte différents organes fonctionnels du véhicule comme, par exemple, son radiateur, différents réservoirs, un ou plusieurs convergents, une traverse de choc.
- La partie structurelle embarque une voie basse qui est rapportée sur le véhicule en même temps que les autres pièces portées par la partie structurelle.
- La partie structurelle comporte des supports d'équipement complémentaires, tels que des supports de batteries, de filtres à air, de boîtiers d'intégration moteurs, de calculateurs.
- La face avant technique supporte deux serrures de capot qui sont situées chacune à l'extrémité supérieure d'un jambage vertical fixé à une extrémité de longeron et constituant, avec l'autre jambage fixé à l'autre longeron, les seules pièces formant la partie structurelle de la face avant technique selon l'invention. Dans ce cas, les efforts de claquage et d'arrachage du capot sont directement transmis des serrures aux longerons par les jambages et aucune traverse centrale n'est requise.

La présente invention a également pour objet un bloc avant de véhicule automobile, caractérisé par le fait qu'il est divisé en deux modules, à savoir un module structurel intégrant différents organes fonctionnels du véhicule et un module géométrique comportant un support tel que décrit ci-dessus et intégrant les éléments de carrosserie de l'avant du véhicule.

Afin de faciliter la compréhension de l'invention, on va en décrire maintenant des modes de réalisation fournis à l'aide d'exemples non limitatifs, illustrés par les dessins annexés, dans lesquels :
- la figure 1 est une vue en perspective partiellement éclatée d'un bloc avant de véhicule automobile,
- la figure 2 est une vue en perspective du module géométrique du bloc avant de la figure 1 portant un bouclier légèrement modifié,
- la figure 3 est une vue en perspective du module structurel de la figure 1,
- la figure 4 est une vue en perspective de l'avant du châssis d'un véhicule automobile recevant le bloc avant de la figure 1,
- les figures 5 et 6 sont des vues analogues, respectivement, aux figures 3 et 4, d'un autre mode de réalisation du bloc avant,
- la figure 7 est une vue analogue à la figure 3 d'un autre mode de réalisation,
- la figure 8 est une vue analogue à la figure 3 d'un autre mode de réalisation,
- la figure 9 est une vue en perspective de l'arrière d'un module géométrique selon un autre mode de réalisation de l'invention,
- la figure 10 est une vue du détail X de la figure 9, après positionnement d'un bloc optique sur le module géométrique,
- la figure 11 est une vue de devant du même module géométrique après positionnement des deux blocs optiques.

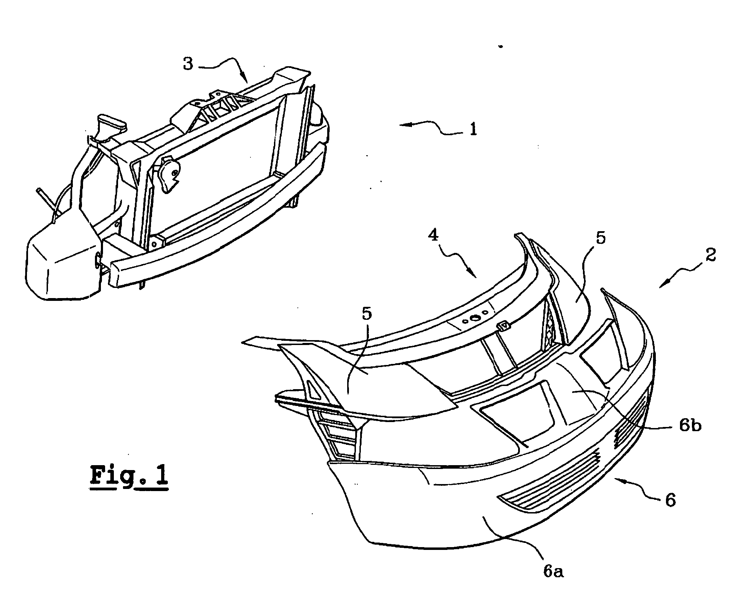

Le bloc avant représenté à la figure 1 comprend, conformément à l'invention, un module structurel et un module géométrique 2.

Le module structurel 1 est constitué par une partie structurelle 3 d'une face avant technique et différents organes fonctionnels du véhicule assemblés sur cette partie structurelle.

Le module géométrique est constitué par une partie géométrique 4 de la même face avant technique, par deux vitrages d'optique 5 et un bouclier 6 rapportés sur cette partie géométrique.

Le bouclier 6 comprend une partie inférieure 6a constituant une peau de pare-chocs pourvue de deux crosses d'extrémités 16 et une partie supérieure 6b constituant une calandre.

Les parties 6a et 6b sont conformées et agencées de manière que chaque vitrage d'optique 5 occupe le coin formé par la peau de pare-chocs et la calandre.

En d'autres termes, chaque vitrage d'optique est bordé inférieurement par la peau de bouclier et latéralement, du côté intérieur, par la calandre.

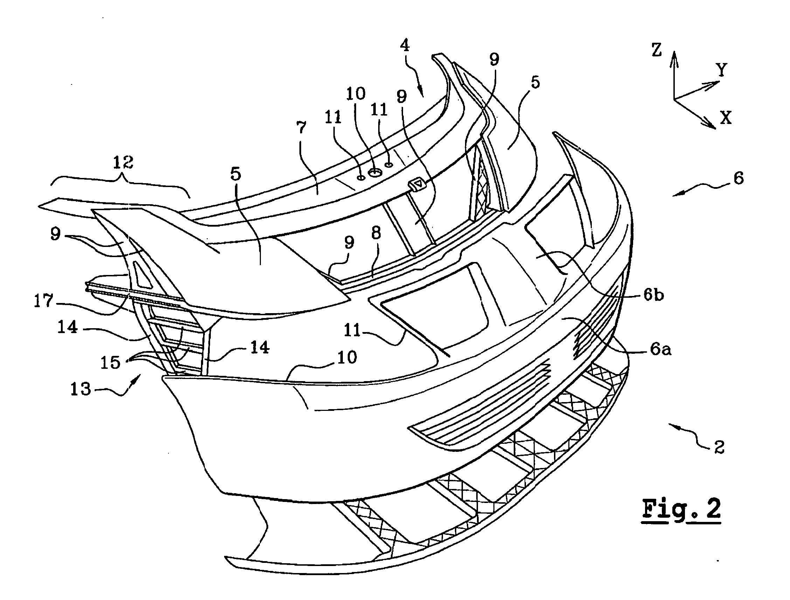

En outre, dans l'exemple de la figure 2, un ski sous moteur renforcé est ajouté au bouclier.

Comme on le voit mieux sur la figure 2, la partie géométrique comprend une traverse supérieure 7 qui s'étend horizontalement d'un côté à l'autre du véhicule et un bord inférieur 8 sensiblement parallèle à la traverse 7, réuni à cette dernière par des montants 9 sensiblement verticaux.

La traverse 7 et le bord inférieur 8 sont recourbés à leurs extrémités en direction de l'arrière du véhicule, de sorte qu'ils comportent des portions d'extrémités 12 s'étendant sensiblement selon la direction longitudinale du véhicule.

Dans ces portions d'extrémités 12, une structure 13 s'étend vers le bas à partir du bord inférieur 8 en étant constituée par deux montants 14 sensiblement verticaux réunis par des barreaux 15 horizontaux. Cette structure 13 présente une certaine rigidité.

Chaque vitrage d'optique 5 est logé dans un compartiment délimité par la traverse 7, le bord inférieur 8 et deux des montants verticaux 9.

La fixation de chaque vitrage d'optique sur la partie géométrique est assurée par des moyens conventionnels (non représentés).

Dans sa partie centrale, la traverse 7 comprend un passage traversant 10 et deux orifices de fixation 11. Dans l'exemple illustré, le passage 10 est situé exactement au milieu de la traverse 7, aussi bien selon la direction longitudinale X que selon la direction transversale Y.

Le passage traversant 10 et les orifices de fixation 11 sont destinés à recevoir une serrure de capot (non représentée) qui se trouve ainsi très précisément positionnée selon les directions X, Y et Z par rapport aux vitrages d'optique 5 et au bouclier 6.

Le bord inférieur 8, qui borde les deux vitrages d'optique 5, est en outre conformé vers l'avant pour former un soutien de maintien du bouclier 6 à affleurement de chaque vitrage 5.

Chaque crosse 16 de la peau de pare-chocs 6a s'étend jusqu'à la structure rigide 13 correspondante, laquelle sert de contre-lame de renfort évitant un débattement latéral du bouclier.

Enfin, le bord inférieur 8 est muni, dans chacune de ses deux portions d'extrémités 12, d'un pontet de liaison 17 entre l'aile (non représentée) et le bloc avant, pontet qui a pour but de forcer l'aile à se conformer exactement à la forme du module géométrique de manière à être parfaitement mise en référence par rapport aux vitrages d'optique 5 et au bouclier 6.

Le pontet, qui n'est pas détaillé sur le dessin, est agencé pour assurer la préservation de l'aile en cas de déformation importante du pare-chocs, grâce à un mécanisme de dégagement qui libère l'aile du pare-chocs si celui-ci recule fortement.

Ainsi que cela résulte de l'explication qui précède, l'assemblage des vitrages d'optique et du bouclier sur la partie géométrique 4 s'effectue en-dehors de la chaîne de montage du véhicule. Dès cet assemblage, les vitrages d'optique et le bouclier sont parfaitement mis en référence les uns par rapport aux autres. En outre, grâce aux pontets de liaison entre l'aile et le bloc avant, la mise en référence de l'aile par rapport au vitrage d'optique est garantie.

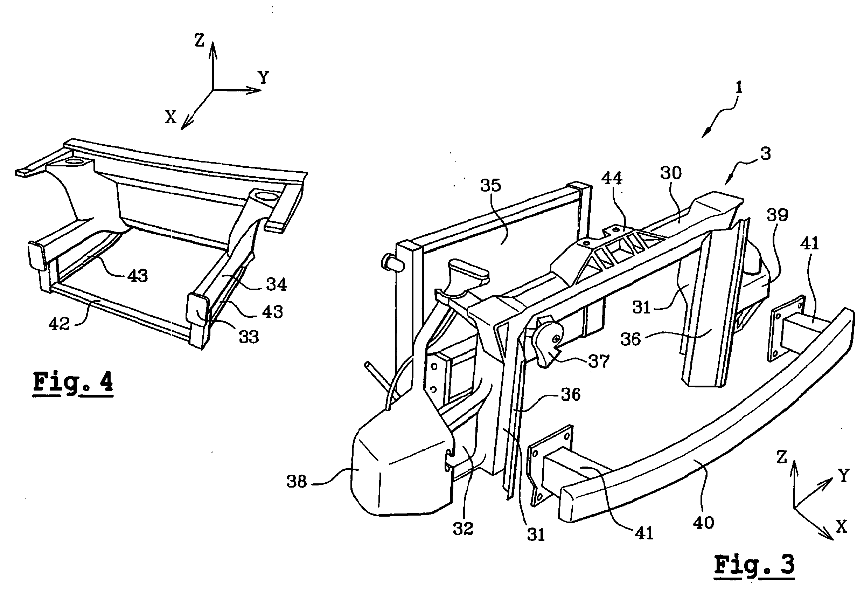

En référence maintenant à la figure 3, on va décrire le module structurel du bloc avant de la figure 1.

Ce module est formé par la partie structurelle 3 de la face avant technique, qui est ici constituée par une traverse horizontale supérieure 30 et par deux jambages verticaux latéraux 31 dans lesquels sont formées des platines 32 de fixation aux extrémités 33 des longerons 34 d'un véhicule.

Dans l'exemple illustré par la figure 3, un radiateur 35 vient se loger à l'intérieur de la partie structurelle, c'est-à-dire entre les deux jambages latéraux 31 et la traverse supérieure 30. En outre, chaque jambage 31 supporte un convergent latéral 36 et l'un des jambages supporte un avertisseur 37 et un réservoir 38, tandis que l'autre jambage supporte un bocal de dégazage 39.

Une poutre de chocs 40, montée à ses extrémités sur des absorbeurs 41, vient, en outre, s'ajouter à l'avant de la partie structurelle 3 en étant fixée sur les platines de fixation 32.

Dans l'exemple illustré, le châssis (figure 4) recevant le module structurel comporte une poutre inférieure 42 sur sa voie basse 43.

La traverse supérieure 30 est munie, formée d'un seul tenant avec elle, d'une platine 44 de retenue en Z de la serrure du capot. Cette retenue de la serrure du capot ne vise qu'à reprendre les efforts d'arrachage et de claquage, dirigés selon la direction verticale Z, que subit la serrure du capot, mais ne modifie pas le positionnement en X et Y imposé par la partie géométrique.

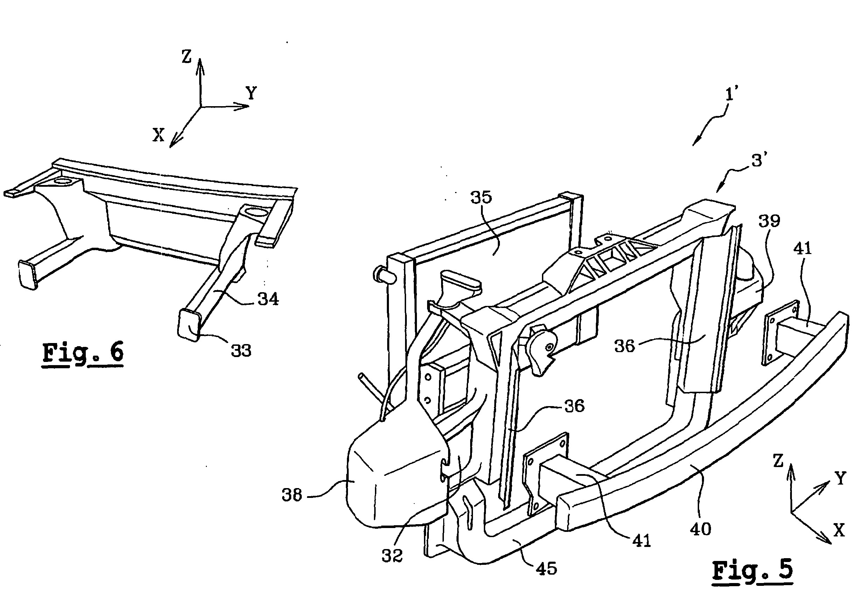

Dans le mode de réalisation de la figure 5, on retrouve les mêmes organes fonctionnels rapportés sur la partie structurelle 3' de la face avant technique. Cependant, le châssis du véhicule (voir figure 6) ne comportant pas de voie basse, une traverse «voie basse» 45 est ajoutée à la partie structurelle de la face avant technique, par fixation à la face dirigée vers l'intérieur du véhicule des platines de fixation 32.

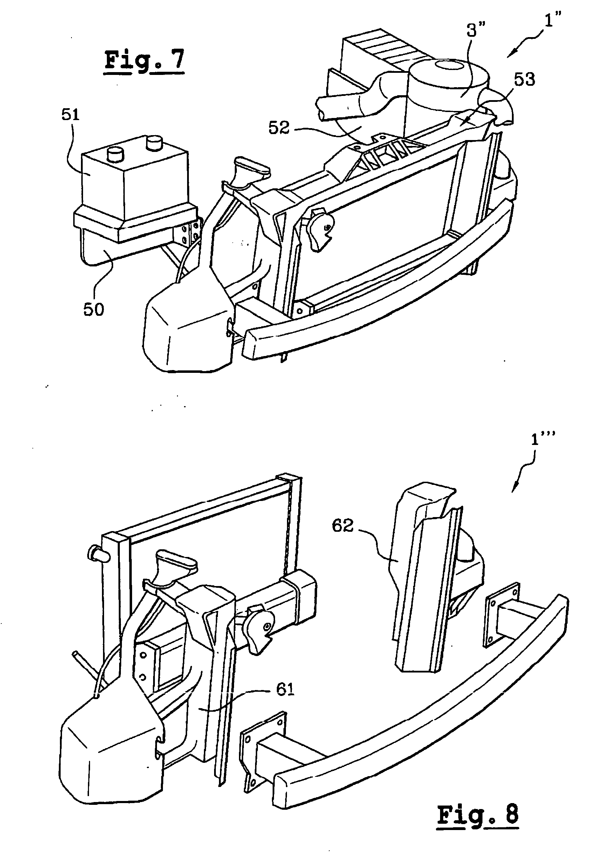

A la figure 7, on a représenté un autre mode de réalisation correspondant sensiblement à la figure 3 mais dans lequel des équipements supplémentaires sont embarqués sur la partie structurelle 3 du bloc avant : un support 50 d'une batterie 51, fixé sur l'un des jambages 31, et un support 52 d'un filtre à air 53, fixé sur l'autre jambage.

Il convient de noter que chacun de ces supports 50, 52 n'a pas à être dimensionné pour être capable de résister seul aux contraintes résultant de la présence de l'équipement qu'il supporte lors de l'utilisation du véhicule. Il suffit que ledit support puisse soutenir l'équipement pendant l'opération de montage du module structurel sur le véhicule. Lors de ce montage, d'autres fixations peuvent, en effet, relier directement la caisse du véhicule audit support, de manière à le renforcer en vue de l'utilisation du véhicule.

Dans le mode de réalisation de la figure 8, la partie structurelle 1"' de la face avant technique est réduite aux deux jambages 61 et 62, la traverse supérieure ayant été supprimée. Dans cette variante, la fermeture du capot moteur est assurée par deux serrures (non représentées) qui sont chacune fixées à la partie supérieure de chaque jambage (après positionnement selon les directions X et Y par la partie géométrique).

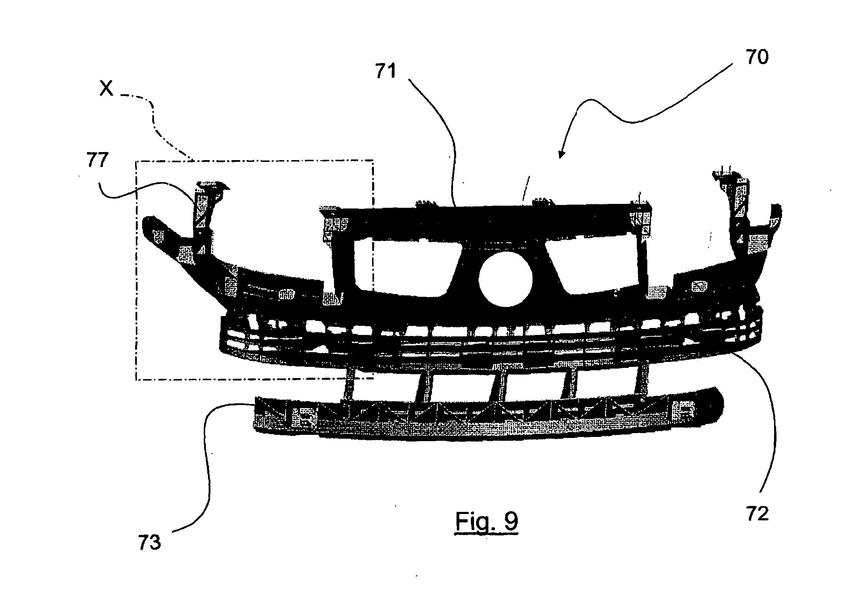

Dans le mode de réalisation de la figure 9, le module géométrique 70 est fonctionnellement identique à celui des figures 1 et 2, mais il comporte en plus tout d'abord une armature supérieure 71 qui vient soutenir la peau du bouclier 6 au niveau de la hanche ou du fémur (non représentés) d'un piéton qui viendrait impacter l'avant du véhicule en cas d'accident. Cette armature supérieure 71 ne peut être considérée comme structurelle au sens où elle n'influe pas sur la structure du véhicule et ne concerne pas les chocs à haute énergie susceptibles d'endommager la structure du véhicule, mais se limite au traitement des chocs piétons.

De plus, le module géométrique 70 comporte un absorbeur 72 à hauteur de la poutre de chocs, ainsi qu'une poutre en partie basse 73, laquelle peut intégrer ou renforcer un ski sous moteur, comme celui du bouclier de la figure 2.

En combinaison, ces trois éléments 71, 72, 73 permettent de maintenir la jambe d'un piéton adulte aux niveaux du tibia, du genou et de la hanche, en lui évitant des angles de cassure trop importants. La peau du bouclier, qui recouvre directement le module géométrique, est soutenue en ces trois emplacements afin d'être capable d'absorber l'énergie d'impacts de jambe qui n'ont pas de conséquence sur la structure du véhicule.

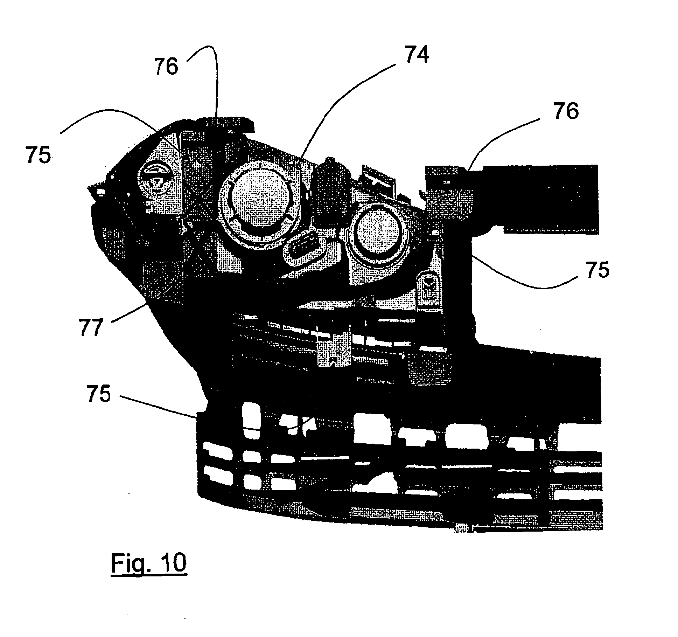

Sur la figure 10, on a représenté le détail X de la figure 9, sur lequel on voit mieux la manière dont un bloc optique 74 est positionné sur le module géométrique et ainsi mis en référence par rapport au bouclier.

Des fixations 75 retiennent le bloc optique sur le module géométrique et d'autres fixations 76 sont prévues pour fixer le module géométrique sur la partie structurelle de la face avant technique. Le bloc optique 74 est solidement supporté par un berceau formé notamment par une bretelle 77 délimitant le fond de son logement destiné à recevoir l'optique.

Les fixations 75 sont avantageusement fusibles, ce qui permet de traiter les chocs piétons latéraux en libérant les blocs optiques qui peuvent ainsi s'effacer devant la hanche d'un piéton.

Comme précédemment décrit, différents organes fonctionnels sont rapportés sur les jambages formant la partie structurelle de la face avant technique.

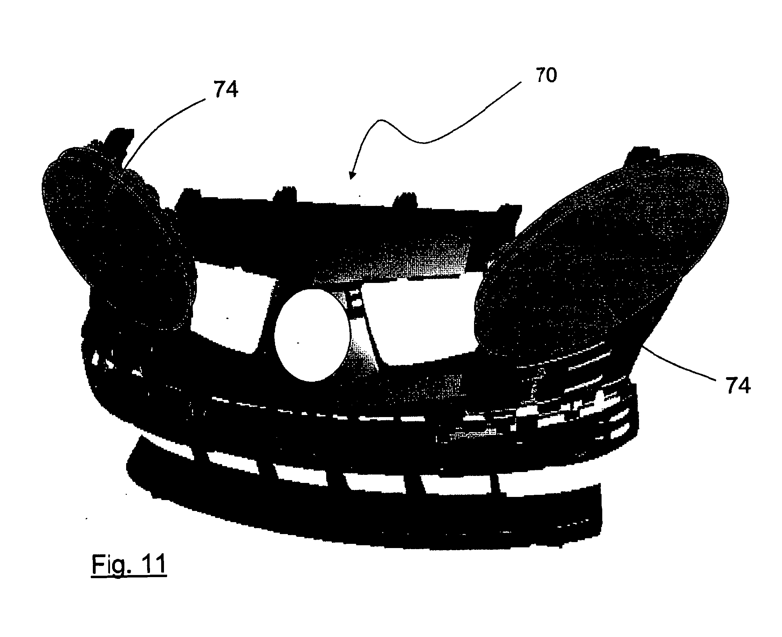

La figure 11 montre les deux blocs optiques montés sur le module géométrique et ainsi convenablement positionnées par rapport au bouclier et autres pièces de carrosserie environnantes.

Deux scénarios de montage sont possibles pour les modules structurel et géométrique des figures 1 à 9 :
- Soit le module structurel est monté avec le groupe motopropulseur. Dans ce cas, le circuit de refroidissement qui incorpore le radiateur est connecté au moteur du véhicule et le module structurel repose sur un berceau moteur. L'ensemble constitué par le moteur et le module structurel est amené sur le véhicule. La position verticale Z du module structurel est régiée par rapport à une référence géométrique de carrosserie, qui peut être fournie par les extrémités de renfort des côtés d'auvents. Enfin, le module est fixé sur la caisse, à l'extrémité des deux longerons.
- Soit le module structurel est monté après le groupe motopropulseur. Dans ce cas, le module structurel, qui incorpore le radiateur, est amené sur le véhicule puis le circuit de refroidissement est connecté au moteur, de préférence avec des raccords rapides. La position verticale Z du module structurel est alors réglée par rapport à une référence géométrique de carrosserie qui peut être fournie par l'extrémité des renforts de côtés d'auvent, puis le module structurel est fixé sur la caisse du véhicule, à l'extrémité des deux longerons.

Dans un deuxième temps, le module géométrique du bloc avant est monté sur le module structurel.

Le module géométrique est positionné sur le véhicule par appui vertical suivant la direction Z sur le module structurel déjà en place, tandis qu'il se positionne suivant les directions X et Y par référence géométrique à la carrosserie, par exemple en s'appuyant sur les extrémités des renforts de côtés d'auvent.

Les pontets de liaison entre l'aile et le bouclier re-conforment l'extrémité de chaque aile et la maintient, de façon à conserver un bon accostage de l'aile sur le module géométrique et à réaliser une mise en référence durable par rapport aux vitrages d'optique et par rapport au bouclier.

La serrure du capot, convenablement positionnée suivant les directions X et Y, est reliée, suivant la direction Z, à la traverse supérieure du module structurel qui peut ainsi reprendre les efforts auxquels ladite serrure est soumise pour les transmettre aux longerons du véhicule.

Enfin, le module géométrique est fixé sur la caisse du véhicule par liaison avec les extrémités de renforts de côtés d'auvents.

Il est bien entendu que les modes de réalisation qui ont été décrits ci-dessus ne présentent aucun caractère limitatif et pourraient recevoir toute modification désirable sans sortir pour cela du cadre de l'invention.

En particulier, bien que les exemples illustrés ne décrivent que des vitrages d'optiques, il est clair selon l'invention que d'autres éléments d'optiques, tels que des blocs optiques complets ou des survitrages, peuvent être intégrés à la partie géométrique de la face avant technique.

De même, la serrure de capot, présente dans tous les modes de réalisation décrits, n'est pas indispensable à la réalisation de l'invention telle que définie par la revendication 1.

Enfin, on notera que le module géométrique peut être réalisé en plusieurs parties réunies entre elles de manière à réajuster une de ses dimensions, par exemple suivant la direction Y. La réalisation d'un tel module en plusieurs parties suppose simplement l'ajout de moyens de fixation entre ses parties, mais aucune contrainte particulière de tenue mécanique ne s'impose étant donné que le module géométrique ne remplit pas de fonction structurelle pour le véhicule.

## Revendications

1. Support pour un bouclier et au moins deux éléments d'optiques (5) destiné à être fixé sur un véhicule automobile devant une partie structurelle sur laquelle une poutre de pare-chocs (40) est fixée, le support comprenant :
- des moyens (9) de réception et de fixation d'au moins deux éléments d'optiques (5) ;
- des organes (8, 13) de fixation d'un bouclier (6) ;
- des zones d'accostage (8, 13) pour recevoir les bords du bouclier et les mettre en référence avec les bords d'éléments de carrosserie et d'éléments d'optiques adjacents ;
- un absorbeur (72) à hauteur de la poutre de pare-chocs pour traiter les chocs « jambe ».

2. Support selon la revendication 1, comportant des organes (8) de soutien d'éléments de carrosserie (6).

3. Support selon l'une quelconque des revendications 1 et 2, dans lequel les zones d'accostage assurant notamment l'accostage des éléments de carrosserie portés par le support avec des éléments de carrosserie environnants sont constitués par des presseurs aile/bouclier (17) et les zones d'accostage agissant entre l'éléments de carrosserie et d'optiques portés par le support sont constitués par une fixation calandre/bouclier et un soutien (8) de la plage supérieure du bouclier (6).

4. Support selon l'une quelconque des revendications 1 à 3, comprenant en outre des moyens de positionnement (10) et de fixation (11) d'une serrure capot.

5. Support selon l'une quelconque des revendications 1 à 4, comprenant une traverse d'aspect qui masque, sous le capot, une traverse structurelle.

6. Support selon l'une quelconque des revendications 1 à 5, comprenant une armature supérieure (71) destinée à servir d'appui au bouclier (6) pour traiter les chocs "hanche" des piétons (ou les chocs "tête enfant"), et l'appui fessier.

7. Support selon l'une quelconque des revendications 1 à 6, comprenant une poutre en partie basse (73) pour traiter les chocs "jambe".

8. Face avant technique, **caractérisée par le fait qu'**elle est divisée en deux parties, à savoir une partie structurelle (3,3',3") recevant des organes fonctionnels du véhicule et une partie géométrique (4) constituée par un support selon l'une quelconque des revendications 1 à 7.

9. Face avant technique selon la revendication 8, dans laquelle la partie structurelle (3,3',3") respecte une référence géométrique de la carrosserie selon la direction verticale.

10. Face avant technique selon la revendication 9, dans laquelle la partie géométrique (4) s'appuie verticalement sur la partie structurelle (3,3',3") qui lui impose son positionnement suivant la direction verticale et se positionne suivant les directions longitudinale et transversale par rapport à une référence géométrique de la carrosserie.

11. Face avant technique selon l'une quelconque des revendications 8 à 10, dans laquelle la partie structurelle (3,3',3") est agencée pour être fixée sur la caisse du véhicule, à l'extrémité de ses deux longerons.

12. Face avant technique selon l'une quelconque des revendications 8 à 11, dans laquelle la fixation de la partie géométrique (4) sur la caisse s'effectue par les extrémités de renforts de côtés d'auvents, et par une re-fixation de la serrure sur la partie structurelle selon la direction verticale.

13. Face avant technique selon l'une quelconque des revendications 8 à 12, comprenant un support selon la revendication 4 et dans laquelle la partie géométrique et la partie structurelle comportent, au voisinage de la serrure, des sections profilées qui, en s'assemblant, forment un corps creux qui rigidifie la face technique dans la région de fixation de la serrure.

14. Face avant technique, selon l'une quelconque des revendications 8 à 13, dans laquelle la partie structurelle (3') embarque une voie basse (45) qui est rapportée sur le véhicule en même temps que les autres pièces portées par la partie structurelle.

15. Face avant technique selon l'une quelconque des revendications 8 à 14, supportant deux serrures de capot qui sont situées chacune à l'extrémité supérieure d'un jambage vertical (61,62) fixé à une extrémité de longeron et constituant, avec l'autre jambage fixé à l'autre longeron, les seules pièces formant la partie structurelle.

16. Bloc avant de véhicule automobile, **caractérisé par le fait qu'**il est divisé en deux modules, à savoir un module structurel (1,1',1",1"') intégrant différents organes fonctionnels du véhicule et un module géométrique (2) comportant un support selon l'une quelconque des revendications 1 à 7 et intégrant les éléments de carrosserie de l'avant du véhicule.

17. Procédé de montage de pièces sur une face avant technique d'un véhicule automobile selon l'une quelconque des revendications 8 à 15, **caractérisé en ce que** l'on exécute les étapes suivantes, la direction X indiquant la direction horizontale longitudinale du véhicule, la direction Y indiquant la direction horizontale transversale du véhicule et la direction Z indiquant la direction verticale :
- on fixe la partie structurelle de la face avant technique au châssis du véhicule, sans positionnement précis selon les directions X et Y mais en respectant une référence géométrique de la carrosserie selon la direction Z,
- on place ensuite la partie géométrique de la face avant technique en l'appuyant verticalement sur la partie structurelle qui lui impose son positionnement suivant la direction Z, la partie géométrique se positionnant suivant les directions X et Y par rapport à une référence géométrique de la carrosserie.

## Claims

1. A support for a child skin and at list to optical elements (5) intending to be fixed on a motor vehicle in front of a structural part on which a impact beam (40) is fixed, the support comprising :
- means (9) for receiving and fixing at list to optical elements (5);
- members (8, 13) for fixing the child (6) ;
- docking zones (8, 13) to received edges of the child and to position them with the edges of adjacent bodywork elements and optical elements;
- an absorber (72) at the same eight than the bumper beam in order to deal with "leg" impact.

2. A support according to claim 1, including members (8) for propping up bodywork elements (6).

3. A support according to claims 1 or 2, in which the docking zones serving in particular to dock bodywork elements carried by the support with surrounding bodywork elements are constituted by fender/shield pressers (17), and the docking zones acting between the bodywork elements and the optical elements carried by the support are constituted by grille/shield fixing and by propping up the top area of the shield.

4. A support according to anyone of claims 1 to 3, further comprising means for positioning (10) and fixing (11) a hood lock.

5. A support according to anyone of claims 1 to 4, including an appearance cross-member which masks a structural cross-member beneath the hood.

6. A support according to anyone of claims 1 to 5, including a top strength member for acting as a bearing point for the shield in order to deal with pedestrian "thigh" impacts (or "child's head") impacts, and as a bearing point for the buttocks.

7. A support according to anyone of claims 1 to 6, including a low beam (73) for dealing with "leg" impacts.

8. An equipment front face **characterized in that** it is divided into two portions, namely a structural portion (3, 3', 3")receiving functional members of the vehicle, and a geometrical portion (4) constituted by a support according to anyone of claims 1 to 7.

9. An equipment front face according to claim 8, in which the structural portion (3, 3', 3")complies with a geometrical reference of the bodywork in the vertical direction.

10. An equipment front face according to claim 9, in which the geometrical portion (4) bears vertically on the structural portion (3, 3', 3"), thereby imposing its positioning in the vertical direction, and is positioned in the longitudinal and transverse directions relative to a geometrical reference of the bodywork.

11. An equipment front face according to anyone of claims 8 to 10, in which the structural portion (3, 3', 3") is arranged to be fixed on the vehicle body, at the ends of two side rails.

12. An equipment front face according to anyone of claims 8 to 11, in which the geometrical portion is fixed to the body via the ends of scuttle side reinforcements, and by re-fixing the lock on the structural portion in the vertical direction.

13. An equipment front face according to claim 8 to 12, including a support according to claim 4, and in which the geometrical portion and the structural portion in the vicinity of the lock include section members which, on being assembled together, form a hollow body which stiffens the equipment face in the region in which the lock is fixed.

14. An equipment front face according to anyone of claims 8 to 13, in which the structural portion (3') includes a bottom flange (45) which is fitted to the vehicle together with the other parts carried by the structural portion.

15. An equipment front face according to anyone of claims 8 to 14, supporting two hood locks each situated at the top end of a respective vertical leg (61, 62) fixed to one end of a side rail, and, together with the other leg fixed to the other side rail constituting the only parts forming the structural portion.

16. A motor vehicle front block **characterized in that** it is divided into two modules, namely a structural module (1, 1', 1", 1"' integrating various functional members of the vehicle, and a geometrical module (2) comprising a support according to anyone of claims 1 to 7 and integrating the bodywork elements for the front of the vehicle.

17. A method of assembling parts on an equipment front face of a motor vehicle according to anyone of claims 8 to 15, **characterized in that** the following steps are performed, in which the direction X indicates the longitudinal horizontal direction of the vehicle, the direction Y indicates the transverse horizontal direction of the vehicle, and the direction Z indicates the vertical direction:
• fixing the structural portion of the equipment front face to the structure of the vehicle without positioning it precisely in the directions X and Y but complying with a geometrical reference of the bodywork in the direction Z; and
• the putting the geometrical portion of the equipment front face into position by bearing vertically on the structural portion which imposes its positioning in the direction Z thereon, the geometrical portion being positioned in the directions X and Y relative to a geometrical reference of the bodywork.

## Patentansprüche

1. Haltekonstruktion für einen Schutzschild und mindestens zwei optische Elemente (5), die zur Befestigung an einem Auto vor einem strukturellen Teil vorgesehen sind, über dem ein Stoßfängerträger (40) befestigt ist, wobei die Haltekonstruktion Folgendes umfasst:
- Mittel (9) zum Aufnehmen und Befestigen von mindestens zwei optischen Elementen (5);
- Baugruppen (8, 13) zum Befestigen eines Schutzschilds (6);
- Zusammenfügebereiche (8, 13), um die Ränder des Schutzschildes aufzunehmen und sie zu den Rändern der Karosserieelemente und den angrenzenden optischen Bauteilen in Bezug zu setzen;
- einen Absorber (72) auf der Höhe des Stoßfängerträgers, um die Stöße vom Typ "Aufprall auf ein Bein" aufzunehmen.

2. Haltekonstruktion nach Anspruch 1, die Stützeinrichtungen (8) für Karosserieelemente (6) umfasst.

3. Haltekonstruktion nach einem beliebigen der Ansprüche 1 und 2, bei der die Zusammenfügebereiche, die insbesondere das Zusammenfügen der von der Haltekonstruktion getragenen Karosserieelemente mit den umgebenden Karosserieelementen sicherstellen, durch Pressfinger zwischen Kotflügel / Schutzschild (17) gebildet werden und wobei die Zusammenfügebereiche, die zwischen den Karosserieelementen und den von der Haltekonstruktion getragenen optischen Elementen wirken, aus einer Befestigung Kühlergrill / Schutzschild und einer Stützeinrichtung (8) des oberen Bereiches des Schutzschildes (6) bestehen.

4. Haltekonstruktion nach einem beliebigen der Ansprüche 1 bis 3, die außerdem Mittel zum Positionieren (10) und Befestigen (11) einer Motorhaubenverriegelung umfassen.

5. Haltekonstruktion nach einem beliebigen der Ansprüche 1 bis 4, die eine Verkleidungsstrebe umfasst, die unter der Motorhaube eine Strukturstrebe verdeckt.

6. Haltekonstruktion nach einem beliebigen der Ansprüche 1 bis 5, die eine obere Versteifung (71), welche als Stütze für den Schutzschild (6) vorgesehen ist, um Stöße des Typs "Aufprall in Hüfthöhe" bei Fußgängern (oder Stöße vom Typ "Aufprall in Höhe eines Kinderkopfes") aufzunehmen, und die Gesäßstütze umfasst.

7. Haltekonstruktion nach einem beliebigen der Ansprüche 1 bis 6, die einen Träger im unteren Teil (73) umfasst, um die Stöße vom Typ "Aufprall auf ein Bein" aufzunehmen.

8. Technische Vorderfront, **dadurch gekennzeichnet, dass** sie in zwei Teile unterteilt ist, und zwar in einen strukturellen Teil (3, 3', 3"), der die funktionellen Baugruppen des Fahrzeuges aufnimmt, und einen geometrischen Teil (4), der durch eine Haltekonstruktion nach einem beliebigen der Ansprüche 1 bis 7 gebildet wird.

9. Technische Vorderfront nach Anspruch 8, bei welcher der strukturelle Teil (3, 3', 3") in vertikaler Richtung der geometrischen Beschaffenheit der Karosserie Rechnung trägt.

10. Technische Vorderfront nach Anspruch 9, bei welcher der geometrische Teil (4) vertikal auf dem strukturellen Teil (3, 3', 3") aufliegt, dem er seine Position in vertikaler Richtung vorgibt, und die in Längs- und Querrichtung gemäß der geometrischen Gegebenheit der Karosserie angeordnet ist.

11. Technische Vorderfront nach einem beliebigen der Ansprüche 8 bis 10, bei welcher der strukturelle Teil (3, 3', 3") so angeordnet ist, dass er auf dem Chassis des Fahrzeuges am Ende seiner zwei Längsträger befestigt werden kann.

12. Technische Vorderfront nach einem beliebigen der Ansprüche 8 bis 11, bei welcher die Befestigung des geometrischen Teiles (4) auf dem Chassis durch die Enden der Versteifungen der seitlichen Luftführungen und durch eine erneute Befestigung der Verriegelung in vertikaler Richtung auf dem strukturellen Teil erfolgt.

13. Technische Vorderfront nach einem beliebigen der Ansprüche 8 bis 12, die eine Haltekonstruktion nach Anspruch 4 umfasst und in welcher der geometrische Teil und der strukturelle Teil nahe der Verriegelung mit Profil versehene Bereiche umfasst, die bei ihrem Ineinandergreifen einen Hohlraum bilden, der die technische Vorderfront im Bereich der Befestigung der Verriegelung versteift.

14. Technische Vorderfront nach einem beliebigen der Ansprüche 8 bis 13, bei welcher der strukturelle Teil (3') eine untere Führungsschiene (45) enthält, die auf dem Fahrzeug gleichzeitig mit den anderen tragenden Teilen durch das strukturelle Teil befestigt wird.

15. Technische Vorderfront nach einem beliebigen der Ansprüche 8 bis 14, die zwei Verriegelungen für die Motorhaube trägt, die sich jeweils am oberen Ende einer an einem Ende des Längsträgers befestigten senkrechten Säule (61, 62) befinden und zusammen mit der anderen am anderen Längsträger befestigten Säule die einzigen Teile bildet, aus denen der strukturelle Teil besteht.

16. Vorderer Block eines Autos, **dadurch gekennzeichnet, dass** es in zwei Module unterteilt ist, und zwar ein strukturelles Modul (1, 1', 1", 1"'), das unterschiedliche funktionelle Baugruppen des Fahrzeuges enthält, und ein geometrisches Modul (2), das eine Haltekonstruktion nach einem beliebigen der Ansprüche 1 bis 7 umfasst und die Karosserieteile am Vorderteil des Fahrzeuges enthält.

17. Verfahrensweise zur Montage von Bauteilen auf der Vorderfront eines Autos nach einem beliebigen der Ansprüche 8 bis 15, **dadurch gekennzeichnet, dass** man, wenn man die folgenden Schritte ausführt, wobei die Richtung X die waagerechte Längsachse des Fahrzeuges, die Richtung Y die waagerechte Querachse des Fahrzeuges und die Richtung Z die senkrechte Achse bezeichnen,
- den strukturellen Teil der Vorderfront am Chassis des Fahrzeuges befestigt, ohne dass in den Richtungen X und Y eine genaue Ausrichtung erfolgt, aber ein geometrischer Bezug der Karosserie in Richtung Z berücksichtigt wird,
- danach den geometrischen Teil der Vorderfront anordnet, indem man ihn senkrecht auf dem konstruktiven Teil auflegt, der ihm seine Lage in Z-Richtung vorgibt, wobei der geometrische Teil sich in den Richtungen X und Y durch einen geometrischen Bezug zur Karosserie positioniert.
